# EUROPÄISCHE PATENTSCHRIFT

(11) **EP 2 232 091 B1**
(45) Veröffentlichungstag und Bekanntmachung des Hinweises auf die Patenterteilung: **22.01.2014**
(21) Anmeldenummer: 08869295.9
(22) Anmeldetag: 10.11.2008
(51) Int. Cl.: F16C 33/42, F16C 19/10, F16C 33/38

(54) **KÄFIG FÜR WÄLZKÖRPER**
CAGE FOR ROLLER BODIES
CAGE POUR CORPS DE ROULEMENT

(30) Priorität: 11.01.2008 DE 102008004033
(43) Veröffentlichungstag der Anmeldung: 29.09.2010
(73) Patentinhaber: Schaeffler Technologies AG & Co. KG, 91074 Herzogenaurach (DE)
(72) Erfinder: FUGEL, Wolfgang, 90453 Nürnberg (DE); REIMCHEN, Alexander, 91074 Herzogenaurach (DE)
(86) Internationale Anmeldenummer: PCT/EP2008/065204
(87) Internationale Veröffentlichungsnummer: WO 2009/086964

(56) Entgegenhaltungen:
- EP-A1- 1 818 555
- DE-A1- 19 812 252
- DE-C- 280 119
- FR-A- 340 433
- FR-A- 459 683
- US-A- 1 395 244
- US-A- 3 306 685

## Beschreibung

### Gebiet der Erfindung

Die Erfindung betrifft einen Käfig für kugelförmige Wälzkörper, beispielsweise für Axiallager oder Flachführungen, welcher im Längsschnitt in etwa W-förmig ausgebildet ist, mit einer axial ausgerichteten radial äußeren Seitenwand und einer axial ausgerichteten radial inneren Seitenwand, die durch Stege miteinander verbunden sind und so Zwischenräume zur Aufnahme der Wälzkörper bilden, wobei die Stege derartig ausgebildet sind, dass sie die Bewegungsfreiheit der Wälzkörper in radialer Richtung, in axialer Richtung und in tangentialer Richtung des Käfigs begrenzen, wobei die Stege ausgehend von den Seitenwänden schräg verlaufende Stegabschnitte aufweisen.

### Hintergrund der Erfindung

Käfige für Wälzkörper dienen bekanntlich dazu, die Wälzkörper zwischen den sich gegeneinander drehenden Wälzkörper-Laufbahnen sicher zu führen und auf Abstand zu halten. Nur so wird eine gleichmäßige Lastverteilung ermöglicht, eine gegenseitige Behinderung der Wälzkörper verhindert und damit eine einwandfreie Funktion des Wälzlagers gewährleistet. Zudem ist der Fachmann bestrebt, möglichst viele Wälzkörper im Wälzlager in kompakter Weise unterbringen zu können, um durch eine hohe Wälzkörperdichte Wälzlager für höchste Beanspruchungen bereitstellen zu können. Dies erfordert jedoch die Schaffung von entsprechend vielen Taschen bzw. Freiräumen in dem Wälzkörper-Käfig und führt wiederum zu einer konstruktiven Schwächung des Käfigs. Die Folge ist eine mangelnde Steifigkeit und eine erhöhte Gefahr des mechanischen Versagens des Käfigs im Betrieb.

Im Bereich der Axial-Nadellager haben sich in diesem Zusammenhang im Querschnitt W-förmige bzw. Sigma-förmige Käfige bewährt. Diese sind in der Regel einstückig ausgebildet und weisen eine vergleichsweise große Steifigkeit bei hoher erzielbarer Wälzkörperdichte auf.

Aus der DE 1 840 219 U ist ein gattungsgemäßer Käfig für Wälzkörper bekannt. Der Käfig ist dabei für zylindrische Wälzkörper ausgelegt und weist Stege mit einem besonders ausgestalteten Profil auf, derart, dass die parallel zur horizontalen Teilungsebene der Wälzkörper verlaufenden Stegabschnitte eine größere Breite als die quer dazu verlaufenden Stegabschnitte aufweisen, und die Führung der Wälzkörper daher ausschließlich durch die parallel zur Teilungsebene der Wälzkörper verlaufenden Stegabschnitte erfolgt. Das Profil der Stege ist dazu geeignet, die Bewegungsfreiheit der Wälzkörper in zwei Freiheitsgraden zu begrenzen (die Wälzkörper in diesen Freiheitsgraden sogar nahezu zu fixieren), nämlich sowohl in Umfangsrichtung als auch in axialer Richtung des Käfigs.

Bei einem mechanischen Versagen des Käfigs (Bruch einer der Seitenwände), welches in der Regel durch äußere Einwirkungen ausgelöst wird, kann es passieren, dass es zu einem "Überrollen" durch die Wälzkörper im Bereich des beschädigten Käfigs kommt, das heißt, die Wälzkörper verlassen in radialer Richtung ihren Laufbahn- bzw. Funktionsdurchmesser. Dies führt zu einer örtlichen Schwächung der Lager-Tragfähigkeit und kann unter Umständen weiteren Schaden nach sich ziehen.

In der DE 10 2006 015 547 A1 ist ein aus Kunststoff einstückig gefertigter Käfig für kugelförmige Wälzkörper beschrieben, wobei durch axial zum Käfig vorstehende Vorsprünge zellenartige Kammern für die einzelnen Wälzkörper geschaffen sind und somit eine Beabstandung der Wälzkörper in Umfangsrichtung gesichert ist. Eine Montage von Wälzkörpern am Käfig erfolgt teilweise durch klipsartiges Aufweiten direkt beabstandeter, speziell dafür geformter Vorsprünge. Der Durchmesser der zellenartigen Kammern ist dabei so bemessen, dass den Wälzkörpern ein erhebliches Spiel ermöglicht wird, um ihre Position gegenüber den Kammern in radialer und in Umfangsrichtung verändern zu können.

### Aufgabe der Erfindung

Der Erfindung liegt die Aufgabe zugrunde, einen gattungsgemäßen Käfig für ein Wälzlager derart weiterzubilden, dass die Führung der Wälzkörper gegenüber bekannten Lösungen verbessert wird.

### Zusammenfassung der Erfindung

Der Erfindung liegt die Erkenntnis zugrunde, dass durch geeignete Wahl des Stegprofils des Käfigs dessen Führungseigenschaften entscheidend verbessert werden können.

Gemäß den Merkmalen des Hauptanspruchs betrifft die Erfindung einen kreisförmigen Käfig für kugelförmige Wälzkörper, beispielsweise für Axiallager oder Flachführungen, welcher im Längsschnitt in etwa W-förmig ausgebildet ist, mit einer axial ausgerichteten radial äußeren Seitenwand und einer axial ausgerichteten radial inneren Seitenwand, die durch Stege miteinander verbunden sind und so Zwischenräume zur Aufnahme der Wälzkörper bilden, wobei die Stege derartig ausgebildet sind, dass sie die Bewegungsfreiheit der Wälzkörper in radialer Richtung, in axialer Richtung und in tangentialer Richtung des Käfigs begrenzen, wobei die Stege ausgehend von den Seitenwänden schräg verlaufende Stegabschnitte aufweisen. Bei diesem Wälzlagerkäfig ist zur Lösung der Aufgabe außerdem vorgesehen, dass die Einschränkung der Bewegungsfreiheit der Wälzkörper in radialer Richtung durch Führungsflächen erfolgt, die an den schräg verlaufenden Stegabschnitten ausgebildet sind.

Durch diesen Aufbau wird erreicht, dass die Führung der Wälzkörper deutlich verbessert ist. Außerdem ist die Gefahr eines Überrollens von Käfigteilen durch die Wälzkörper im Schadensfall deutlich reduziert. Die Wälzkörper werden somit allein durch die Stege immer an ihrem Funktionsdurchmesser bzw. an den Wälzkörperlaufbahnen der Lagerteile gehalten.

Die Unteransprüche beschreiben bevorzugte Weiterbildungen oder Ausgestaltungen der Erfindung.

Gemäß einer ersten bevorzugten Weiterbildung ist vorgesehen, dass an jeder einem Wälzkörper zugeordneten Seite eines Stegs die Führungsflächen einen Winkel α miteinander einschließen, der jeweils kleiner als 180 Grad ist. Hierdurch wird unter Beibehaltung des W- bzw. Sigma-Profils mit einfachen Mitteln die radiale Führung der Wälzkörper ermöglicht.

Es ist sehr vorteilhaft, wenn die schräg verlaufenden Stegabschnitte über einen radial verlaufenden Stegabschnitt miteinander verbunden sind, wobei ein solcher Stegabschnitt eines Steges mit dem radial verlaufenden Stegabschnitt eines benachbarten Steges jeweils einen lichten Abstand bildet, welcher kleiner ist als der Durchmesser des zwischen den Stegen aufgenommenen Wälzkörpers. Durch diese Maßnahme ist eine leichte, einklipsartige Montage der Wälzkörper in die zwischen den Stegen befindlichen Zwischenräume möglich, denn bei der Montage drückt der Wälzkörper die benachbarten Stege elastisch auf und bei Erreichen der Wälzkörper-Funktionsstellung federn die Stege wieder in ihre Ausgangsstellung zurück.

Es kann dabei vorteilhafterweise vorgesehen sein, dass die Zwischenräume längs zu den Seitenwänden verlaufende Seiten aufweisen, deren Abstand kleiner ist als der Durchmesser der in den Zwischenräumen aufgenommenen Wälzkörper, wodurch die Halterung der Wälzkörper auch in axialer Richtung des Käfigs auf konstruktiv einfache Weise gewährleistet ist.

Eine höchst zweckmäßige Ausgestaltung des Erfindungsgedankens sieht vor, dass die zwischen den Stegen gebildeten Zwischenräume in der Draufsicht eine in etwa quadratische Kontur aufweisen, wobei deren Seiten mittels Radien ineinander übergehen. Dies ermöglicht zum einen eine deutliche Verminderung der Kerbwirkung in diesen Bereichen, zum anderen trägt dies zur Erhöhung der Packungs- bzw. Wälzkörperdichte bei. Die Packungsdichte lässt sich allerdings auch durch Verminderung der Stegbreite erhöhen.

Wenn vorteilhafterweise die Stege eine axiale Erstreckung H aufweisen, die größer als eine den Seitenwänden zugeordnete axiale Erstreckung h ist, dann kann die Stabilität des Käfigs positiv beeinflusst werden. Außerdem lässt sich durch die axiale Erstreckung der Stege die axiale Freigängigkeit der Wälzkörper beeinflussen.

Zweckmäßigerweise sollte eine Wälzlager-Baueinheit mit wenigstens einem erfindungsgemäßen Käfig ausgestattet sein, um die Funktionssicherheit der Wälzlager-Baueinheit zu verbessern.

### Kurze Beschreibung der Zeichnungen

Die Erfindung wird im Folgenden anhand der beiliegenden Zeichnung anhand bevorzugter Ausführungsbeispiele näher erläutert. Darin zeigt
- Fig. 1: ein erstes Ausführungsbeispiel eines erfindungsgemäßen Käfigs in einer perspektivischen Ansicht,
- Fig. 2: eine Schnittansicht gemäß Schnittverlauf II-II aus Fig. 1,
- Fig. 3: eine Detailansicht III-III aus Fig. 1 in der Draufsicht,
- Fig. 4: eine Draufsicht auf einen erfindungsgemäßen Käfig mit montierten Wälzkörpern,
- Fig. 5: eine Schnittansicht gemäß dem Schnittverlauf V-V aus Fig. 4,
- Fig. 6: eine Schnittansicht gemäß dem Schnittverlauf VI-VI aus Fig. 4,
- Fig. 7: eine Detailansicht VII aus Fig. 6,
- Fig. 8: der Käfig gemäß Fig. 1 in perspektivischer Ansicht mit montierten Wälzkörpern, und
- Fig. 9: ein zweites Ausführungsbeispiel eines erfindungsgemäßen Käfigs in perspektivischer Ansicht mit montierten Wälzkörpern.

### Detaillierte Beschreibung der Zeichnungen

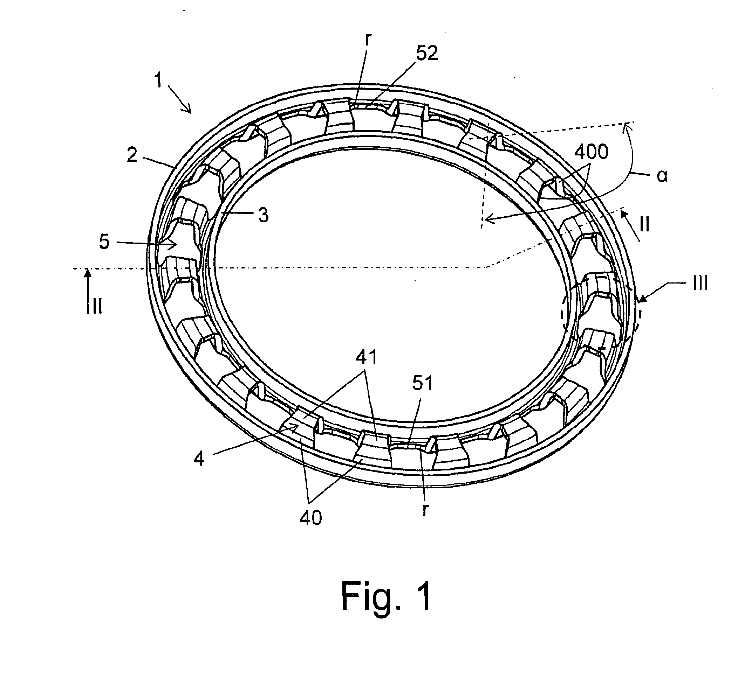

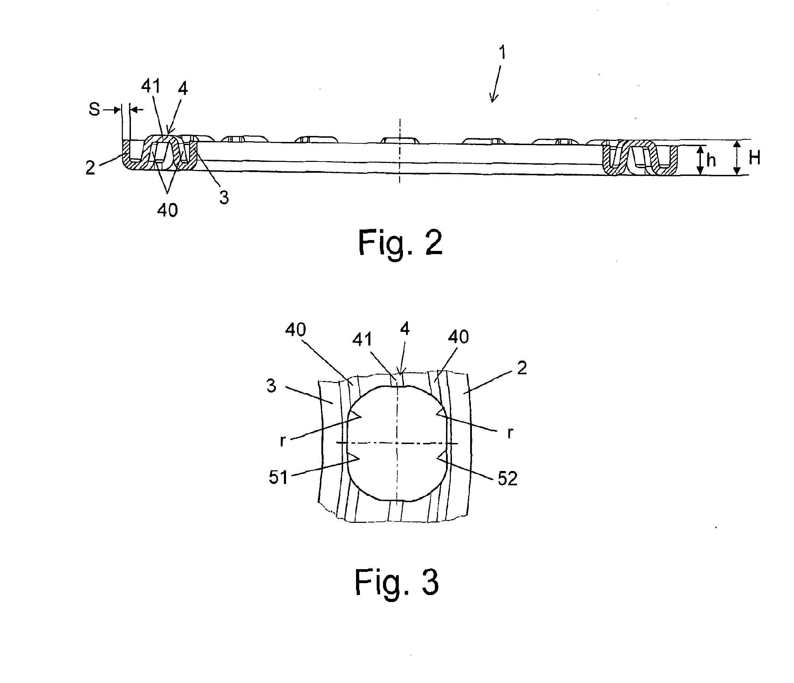

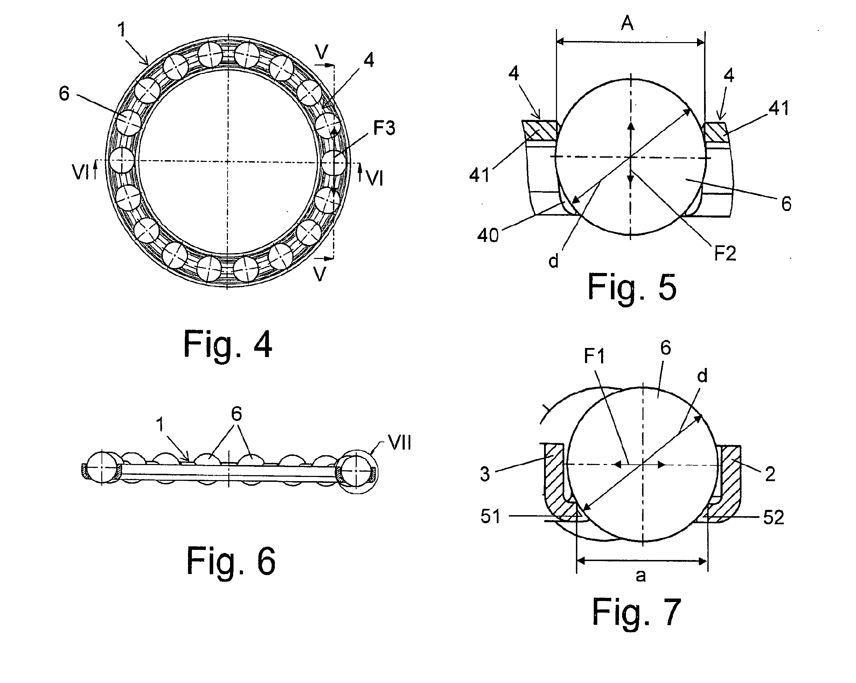

Zunächst wird auf die Figuren 1 bis 3 Bezug genommen. Darin ist ein erstes bevorzugtes Ausführungsbeispiel für einen erfindungsgemäßen Käfig 1 in unterschiedlichen Ansichten dargestellt. Der Käfig 1 weist eine radial äußere Seitenwand 2 und eine radial innere Seitenwand 3 auf, welche über Stege 4 miteinander verbunden sind. Die Stege 4 sind in gleichmäßigen Abständen über den Umfang des Käfigs 1 verteilt angeordnet und bilden zwischen benachbarten Stegen 4 Zwischenräume 5 aus, in denen Wälzkörper 6 montiert werden können, welches gut den Figuren 4 bis 9 entnehmbar ist. Die Stege 4 weisen, ausgehend von den Seitenwänden 2, 3 zunächst schräg nach axial außen verlaufende Stegabschnitte 40 auf, die in einen in etwa radial verlaufenden Stegabschnitt 41 übergehen, der eine axiale Erstreckung H aufweist (Fig. 2). Die Seitenwände 2 und 3 weisen dagegen jeweils eine axiale Erstreckung h auf. Die schräg verlaufenden Stegabschnitte 40 haben an ihren den montierten Wälzkörpern 6 zugewandten Seiten Führungsflächen 400 für die Wälzkörper 6 und schließen einen Winkel α < 180 Grad miteinander ein.

Wie insbesondere Fig. 3 zeigt, weisen die Zwischenräume 5 in der Draufsicht im Umriss in etwa die Form eines Quadrats mit stark abgerundeten Ecken und mit zwei parallelen, längs der Seitenwände 2, 3 verlaufenden Seiten 51, 52 auf, wobei diese Seiten 51, 52 mit den Stegen 4 über Radien r verbunden sind.

Der Käfig 1 ist vorzugsweise einstückig aus gezogenem und gestanztem Stahlblech hergestellt. Die Dicke s des Stahlblechs (vgl. Fig. 2) kann je nach Kugeldurchmesser der Wälzkörper 6 und Funktion der Baueinheit entsprechend angepasst sein. Bei einer käfiggeführten Funktion sollten die Wälzkörper 6 nur geringfügig oder gar nicht gegenüber der axial flachen Seite des Käfigs 1 hervorstehen. In diesem Fall kann ein vergleichsweise dickes Stahlblech (Verhältnis Stahlbanddicke / Wälzkörperdurchmesser = ca. 30 %) gewählt werden. Bei einer wälzkörpergeführten Funktion ist eine reduzierte Dicke s des Stahlblechs (Verhältnis Stahlband / Wälzkörperdurchmesser <= ca. 25 %) geeignet.

In den Figuren 4 bis 8, auf die im Folgenden Bezug genommen wird, ist der Käfig 1 gemäß der Erfindung mit montierten Wälzkörpern 6 dargestellt. Die Wälzkörper 6 sind kugelförmig und haben einen Durchmesser d. Sie könnten aber auch andere Formen aufweisen, beispielsweise zylindrisch sein. Dies würde eine entsprechende konstruktive Anpassung des Käfigs 1 erforderlich machen. Es ist zu erkennen, dass die längs der Seitenwände 3, 2 verlaufenden Seiten 51 und 52 einen Abstand a zueinander aufweisen, der kleiner ist als der Durchmesser d der Wälzkörper 6. Ferner ist ersichtlich, dass der radial verlaufende Stegabschnitt 41 eines Steges 4 mit dem radial verlaufenden Stegabschnitt 41 eines benachbarten Steges 4 jeweils einen lichten Abstand A bildet, welcher kleiner ist als der Durchmesser d des zwischen den Stegen 4 aufgenommenen Wälzkörpers 6. Durch die oben beschriebene Gestaltung des Käfigs 1 ist es möglich, die Bewegungsfreiheit der Wälzkörper 6 in drei Freiheitsgraden zu begrenzen, nämlich in einem ersten, radial zum Käfig 1 stehenden Freiheitsgrad F1, in einem zweiten, axial zum Käfig 1 stehenden Freiheitsgrad F2 und einem dritten, tangential zum Käfig 1 stehenden Freiheitsgrad F3 (siehe Figuren 4, 5 und 7).

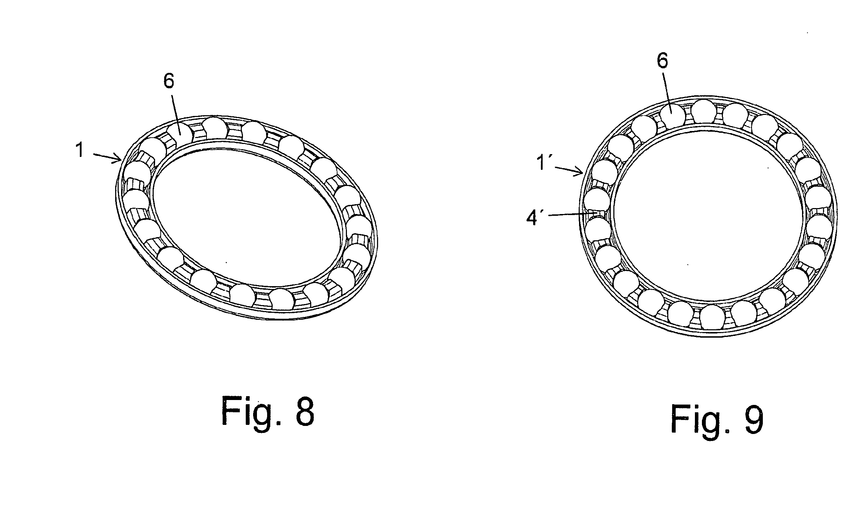

Schließlich ist in Fig. 9 ein zweites Ausführungsbeispiel eines erfindungsgemäßen Käfigs 1' dargestellt, bei dem im Unterschied zum Käfig 1 der Fig. 8 der Käfig 1' schmalere Stege 4' aufweist. Dies ermöglicht die Erhöhung der Packungsdichte des Käfigs 1 mit Wälzkörpern 6 und dadurch eine größere Tragfähigkeit eines derart aufgebauten Wälzlagers.

### Bezugszeichenliste

- 1, 1': Käfig
- 2: Radial äußere Seitenwand des Käfigs
- 3: Radial innere Seitenwand des Käfigs
- 4, 4': Steg
- 40: Schräg verlaufender Stegabschnitt
- 400: Führungsfläche des schräg verlaufenden Stegabschnitts
- 41: Radial verlaufender Stegabschnitt
- 5: Zwischenraum zwischen zwei benachbarten Stegen
- 51: Längs der Seitenwände verlaufende Seite eines Zwischenraums
- 52: Längs der Seitenwände verlaufende Seite eines Zwischenraums
- 6: Wälzkörper
- a: Abstand zwischen den längs der Seitenwände verlaufenden Seiten des Zwischenraumes
- A: Abstand der benachbarten horizontalen Stegabschnitte
- d: Durchmesser der Wälzkörper
- F1: Freiheitsgrad in radialer Richtung des Käfigs, in dem die Bewegungsfreiheit der Wälzkörper eingeschränkt ist
- F2: Freiheitsgrad in axialer Richtung des Käfigs, in dem die Bewegungsfreiheit der Wälzkörper eingeschränkt ist
- F3: Freiheitsgrad in tangentialer Richtung des Käfigs, in dem die Bewegungsfreiheit der Wälzkörper eingeschränkt ist
- h: Axiale Erstreckung der Seitenwände
- H: Axiale Erstreckung der Stege
- r: Radien über die die längs der Seitenwände verlaufenden Seiten mit den Stegen verbunden sind
- s: Dicke des Käfigwerkstoffes
- α: Winkel, den die Führungsflächen miteinander einschließen

## Patentansprüche

1. Käfig (1, 1') für kugelförmige Wälzkörper (6), beispielsweise für Axiallager oder Flachführungen, welcher im Längsschnitt in etwa W-förmig ausgebildet ist, mit einer axial ausgerichteten radial äußeren Seitenwand (2) und einer axial ausgerichteten radial inneren Seitenwand (3), die durch Stege (4) miteinander verbunden sind und so Zwischenräume (5) zur Aufnahme der Wälzkörper (6) bilden, wobei die Stege (4) derartig ausgebildet sind, dass sie die Bewegungsfreiheit der Wälzkörper (6) in radialer Richtung (F1), in axialer Richtung (F2) und in tangentialer Richtung (F3) des Käfigs (1, 1') begrenzen, wobei die Stege (4) ausgehend von den Seitenwänden (2, 3) schräg verlaufende Stegabschnitte (40) aufweisen, **dadurch gekennzeichnet, dass** die Einschränkung der Bewegungsfreiheit der Wälzkörper (6) in radialer Richtung (F1) durch Führungsflächen (400) erfolgt, die an den schräg verlaufenden Stegabschnitten (40) ausgebildet sind.

2. Käfig nach Anspruch 1, **dadurch gekennzeichnet, dass** an jeder einem Wälzkörper (6) zugeordneten Seite eines Stegs (4) die Führungsflächen (400) einen Winkel (α) miteinander einschließen, der jeweils kleiner ist als 180 Grad.

3. Käfig nach Anspruch 1 oder 2, **dadurch gekennzeichnet, dass** die schräg verlaufenden Stegabschnitte (40) über einen radial verlaufenden Stegabschnitt (41) miteinander verbunden sind, wobei ein solcher Stegabschnitt (41) eines Steges (4) mit dem radial verlaufenden Stegabschnitt (41) eines benachbarten Steges (4) jeweils einen lichten Abstand (A) bildet, welcher kleiner ist als der Durchmesser (d) des zwischen den Stegen (4) aufgenommenen Wälzkörpers (6).

4. Käfig nach einem der vorherigen Ansprüche, **dadurch gekennzeichnet, dass** die Zwischenräume (5) in der Draufsicht eine in etwa quadratische Kontur aufweisen, wobei deren Seiten mittels Radien (r) ineinander übergehen.

5. Käfig nach Anspruch **4, dadurch gekennzeichnet, dass** die Zwischenräume (5) längs zu den Seitenwänden (2, 3) verlaufende Seiten (51, 52) aufweisen, deren Abstand (a) kleiner ist als der Durchmesser (d) der in den Zwischenräumen (5) aufgenommenen Wälzkörper (6).

6. Käfig nach einem der vorherigen Ansprüche, **dadurch gekennzeichnet, dass** die Stege (4) eine axiale Erstreckung (H) aufweisen, die größer ist als die axiale Erstreckung (h) der Seitenwände (2, 3).

7. Wälzlager-Baueinheit mit wenigstens einem Käfig (1, 1') nach wenigstens einem der vorherigen Ansprüche.

## Claims

1. Cage (1, 1') for spherical rolling bodies (6), for example for axial bearings or flat guides, which is of approximately W-shaped form in longitudinal section, with an axially oriented radially outer side wall (2) and with an axially oriented radially inner side wall (3) which are connected to one another by means of webs (4) and thus form interspaces (5) for receiving the rolling bodies (6), the webs (4) being formed in such a way that they limit the freedom of movement of the rolling bodies (6) in the radial direction (F1), in the axial direction (F2) and in the tangential direction (F3) of the cage (1, 1'), the webs (4) having web portions (40) running obliquely from the side walls (2, 3), **characterized in that** the restriction of the freedom of movement of the rolling bodies (6) in the radial direction (F1) takes place by means of guide faces (400) which are formed on the obliquely running web portions (40).

2. Cage according to Claim 1, **characterized in that**, on each side, assigned to a rolling body (6), of a web (4), the guide faces (400) form with one another an angle (α) which in each case is smaller than 180 degrees.

3. Cage according to Claim 1 or 2, **characterized in that** the obliquely running web portions (40) are connected to one another via a radially running web portion (41), such a web portion (41) of a web (4) forming with the radially running web portion (41) of an adjacent web (4) in each case a clearance (A) which is smaller than the diameter (d) of the rolling body (6) received between the webs (4).

4. Cage according to one of the preceding claims, **characterized in that** the interspaces (5) have an approximately square contour in a top view, their sides emerging one into the other by means of radii (r).

5. Cage according to Claim 4, **characterized in that** the interspaces (5) have sides (51, 52) which run longitudinally with respect to the side walls (2, 3) and the clearance (a) between which is smaller than the diameter (d) of the rolling bodies (6) received in the interspaces (5).

6. Cage according to one of the preceding claims, **characterized in that** the webs (4) have an axial extent (H) which is greater than the axial extent (h) of the side walls (2, 3).

7. Rolling-bearing structural unit with at least one cage (1, 1') according to at least one of the preceding claims.

## Revendications

1. Cage (1, 1') pour corps de roulement de forme sphérique (6), par exemple pour paliers axiaux ou guidages plats, qui est réalisée en coupe longitudinale approximativement en forme de W, comprenant une paroi latérale radialement extérieure orientée axialement (2) et une paroi latérale radialement intérieure orientée axialement (3), lesquelles sont connectées l'une à l'autre par des nervures (4) et forment ainsi des espaces intermédiaires (5) pour recevoir les corps de roulement (6), les nervures (4) étant réalisées de telle sorte qu'elles limitent la liberté de mouvement des corps de roulement (6) dans la direction radiale (F1), dans la direction axiale (F2) et dans la direction tangentielle (F3) de la cage (1, 1'), les nervures (4) présentant des portions de nervure (40) s'étendant obliquement à partir des parois latérales (2, 3), **caractérisée en ce que** la limitation de la liberté de mouvement des corps de roulement (6) dans la direction radiale (F1) s'effectue par des surfaces de guidage (400) qui sont réalisées sur les portions de nervure (40) s'étendant obliquement.

2. Cage selon la revendication 1, **caractérisée en ce que** sur chaque côté d'une nervure (4) associé à un corps de roulement (6), les surfaces de guidage (400) forment l'une avec l'autre un angle (α) qui est à chaque fois inférieur à 180°.

3. Cage selon la revendication 1 ou 2, **caractérisée en ce que** les portions de nervure s'étendant obliquement (40) sont connectées l'une à l'autre par le biais d'une portion de nervure (41) s'étendant radialement, une telle portion de nervure (41) d'une nervure (4) formant avec la portion de nervure s'étendant radialement (41) d'une nervure adjacente (4) à chaque fois une distance intérieure (A) qui est inférieure au diamètre (d) du corps de roulement (6) reçu entre les nervures (4).

4. Cage selon l'une quelconque des revendications précédentes, **caractérisée en ce que** les espaces intermédiaires (5) présentent, en vue de dessus, un contour approximativement quadratique, leurs côtés se prolongeant les uns dans les autres par des rayons (r).

5. Cage selon la revendication 4, **caractérisée en ce que** les espaces intermédiaires (5) présentent des côtés (51, 52) s'étendant longitudinalement par rapport aux parois latérales (2, 3), dont la distance (a) est inférieure au diamètre (d) des corps de roulement (6) reçus dans les espaces intermédiaires (5).

6. Cage selon l'une quelconque des revendications précédentes, **caractérisée en ce que** les nervures (4) présentent une étendue axiale (H) qui est supérieure à l'étendue axiale (h) des parois latérales (2, 3).

7. Unité structurelle de palier à roulement comprenant au moins une cage (1, 1') selon au moins l'une quelconque des revendications précédentes.
